Europäisches Patentamt

European Patent Office

Office européen des brevets

(11) Veröffentlichungsnummer: **0 511 532 A2**

## (12) EUROPÄISCHE PATENTANMELDUNG

(21) Anmeldenummer: **92106198.2**

(22) Anmeldetag: **10.04.92**

(51) Int. Cl.5: **B60J 1/02**

(30) Priorität: **27.04.91 DE 4113844**

(43) Veröffentlichungstag der Anmeldung:
**04.11.92 Patentblatt 92/45**

(84) Benannte Vertragsstaaten:
**BE DE ES FR GB IT NL SE**

(71) Anmelder: **A. Raymond & Cie**
**113, Cours Berriat**
**F-38028 Grenoble-Cedex(FR)**

(72) Erfinder: **Andre, Guy**
**11, rue du Maréchal Foch**
**F-10300 Saint-Savine(FR)**
Erfinder: **Boville, Daniel**
**45, rue des Prairies**
**F-75020 Paris(FR)**
Erfinder: **Legat, Jean-Jacques**
**1, clos de la tuilerie**
**F-38430 St-Jean de Moirans(FR)**

(74) Vertreter: **Kirchgaesser, Johannes, Dipl.-Ing.**
**p/a Fa. A. RAYMOND KG, Teichstrasse 57**
**W-7850 Lörrach(DE)**

(54) **Halteelement zum vertikalen Positionieren von einklebbaren Scheiben.**

(57) Das vorliegende Halteelement dient zum vertikalen Positionieren von im Rahmen eines Kraftfahrzeuges einklebbaren Scheiben (10). Es besteht im wesentlichen aus einem im unteren Querrahmen (8) einsetzbaren Halteteil (1) und einem gegen den unteren Scheibenrand (3) andrückbaren Stützteil (2).

Um bei der automatisierten Montage der Fensterscheibe (10) eine selbsttätige Anlage des Stützteils (2) am unteren Scheibenrand (3) zu erreichen, ist das Stützteil (2) mit dem Halteteil (1) durch eine in Richtung der Scheibenebene niederdrückbare Feder (4) verbunden und kann durch eine im Halteteil (1) angeformte, elastisch schwenkbare Sperrklinke (9) in gespannter Lage festgehalten werden. Die Sperrklinke (9) ragt hierbei zu diesem Zweck oberhalb des gespannten Stützteils (2) in den Stützbereich hinein und wird von der unteren Scheibenkante (3) beim Anlegen der Scheibe (10) weggedrückt.

FIG.5

Die Erfindung bezieht sich auf ein Halteelement zum vertikalen Positionieren von im Rahmen eines Kraftfahrzeugs einklebbaren Scheiben gemäß dem Oberbegriff des Anspruchs 1.

Aufklebbare Scheiben, wie z.B. Windschutzscheiben oder Heckscheiben, werden üblicherweise automatisch mit einem Freiarmroboter eingesetzt bzw. angelegt. Die Scheiben müssen dabei mit einem konstanten Abstand zum Fensterrahmen plaziert und bis zum Abbinden bzw. Aushärten des Klebers durch Halteelemente vorübergehend positioniert und fixiert werden. Hierzu werden im Kraftfahrzeugbau vielfach Halteelemente mit in der Scheibenebene verstellbaren Stützteilen verwendet, deren Befestigungsschenkel in dem im unteren Querrahmen einsetzbaren Halteil in Richtung senkrecht zum Scheibenrand verschiebbar geführt sind und die einen Halteschenkel aufweisen, auf dem sich die untere Scheibenkante abstützt.

Ein derartiges Halteelement ist beispielsweise aus der DE 34 42 299 C1 bekannt. Das Stützteil ist hierbei mit einer Rasteinrichtung versehen, durch welche der Halteschenkel nach dem Andrücken an den Scheibenrand in jeder gewünschten Höhenlage selbsttätig blockiert ist.

Im Zuge der zunehmenden Automatisierung wird es bei diesem Halteelement als Nachteil empfunden, daß die Stützteile jeweils von Hand bis an den Scheibenrand herangedrückt werden müssen, weil dies mit einem zusätzlichen Arbeitsaufwand verbunden ist.

Aufgabe der Erfindung ist es daher, das vorgenannte Halteelement so zu gestalten, daß das Stützteil beim Anlegen der Scheibe ohne manuelles Eingreifen sich selbsttätig an den unteren Scheibenrand anlegt und dann seine Stützfunktion so lange ausübt, bis die Scheibe vom Kleber gehalten wird.

Zur Lösung dieser Aufgabe werden die im Anspruch 1 angegebenen Gestaltungsmerkmale vorgeschlagen, wobei in den Unteransprüchen noch weitere, für die Ausführung der Erfindung förderliche und zweckmäßige Merkmale angegeben sind, welche bei der nachfolgenden Beschreibung von mehreren Ausführungsbeispielen der Erfindung näher erläutert werden sollen.

Es zeigt:

Fig. 1    eine rein metallische Ausführungsform des erfindungsgemäßen Halteelements in Vorderansicht,

Fig. 2    das gleiche Halteelement in Seitenansicht,

Fig. 3    das gleiche Halteelement in perspektivischer Darstellung mit ungespannter Feder,

Fig. 4    das gleiche Halteelement in perspektivischer Darstellung mit gespannter Feder,

Fig. 5    einen Schnitt durch das im unteren Fensterrahmen eingesetzte Halteelement mit gespannter Feder vor dem Anlegen der Scheibe,

Fig. 6    die gleiche Montagesituation nach dem Anlegen der Scheibe,

Fig. 7    ein anderes aus drei Teilen zusammengesetztes Halteelement in perspektivischer Darstellung im gespannten Zustand,

Fig. 8    das Stützteil hierzu in Unteransicht,

Fig. 9    das Stützteil im Querschnitt gemäß Linie IX - IX in Fig. 10,

Fig. 10   das Stützteil in Vorderansicht,

Fig. 11   das zugehörige Halteteil in Seitenansicht,

Fig. 12   das Halteteil in Vorderansicht,

Fig. 13   das zusammengebaute und im Fensterrahmen montierte Halteelement mit gespanntem Stützteil vor dem Anlegen der Scheibe im Querschnitt,

Fig. 14   das montierte Halteelement nach Fig. 13 in Draufsicht,

Fig. 15   das montierte Halteelement im Querschnitt nach dem Anlegen der Scheibe,

Fig. 16   das montierte Halteelement nach Fig. 15 mit Scheibe in Vorderansicht,

Fig. 17   ein anderes Stützteil mit Rastnase im Schnitt gemäß Linie XVII - XVII in Fig. 18,

Fig. 18   das gleiche Stützteil in Vorderansicht,

Fig. 19   das zugehörige Halteteil mit stufenförmigen Rastrillen im Schnitt gemäß Linie IXX - IXX in Fig. 20,

Fig. 20   das gleiche Halteteil in Vorderansicht,

Fig. 21   das zusammengebaute und im Fensterrahmen montierte Halteelement mit angelegter Scheibe im Schnitt und

Fig. 22   das montierte Halteelement mit angelegter Scheibe in Vorderansicht.

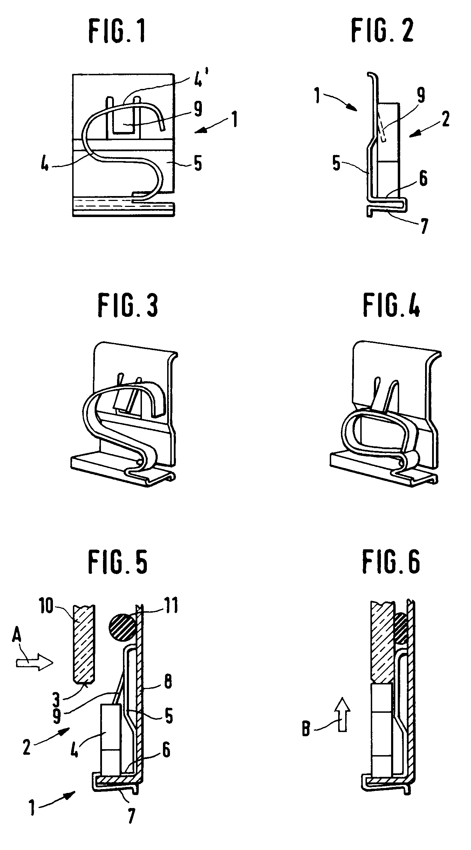

Das in den Figuren 1 bis 6 dargestellte Halteelement ist einstückig aus Federstahlblech ausgestanzt und geformt und besteht im wesentlichen aus einem im unteren Querrahmen 8 einsetzbaren Halteteil 1 und einem gegen den unteren Scheibenrand 3 andrückbaren Stützteil 2, welches durch eine S-förmig gebogene Metallfeder 4 gebildet ist. Das Halteteil 1 besitzt hierbei eine am Querrahmen 8 anlegbare Rückwand 5 und einen an deren unterem Ende rechtwinklig angeformten Stützschenkel 6, der mit einem nach hinten zurückgebogenen Klemmschenkel 7 zur Befestigung des Halteteiles 1 am unteren Querrahmen 8 versehen ist (Fig. 5 und 6).

Am Stützschenkel 6 ist die S-förmig gebogene Feder 4 derart angeformt, daß der obere Bogen 4', der sich etwa über die Breite der Rückwand 5 erstreckt, sich zur Auflage für den Scheibenrand 3 eignet. In der oberen Mitte der Rückwand 5 ist eine elastisch wegdrückbare Sperrklinke 9 so angeformt, daß diese mit ihrem freien Ende abwärts in den Stützbereich hineinragt und die im Anlieferungszustand zunächst ungespannte Feder 4 (Fig. 3) im zusammengedrückten Zustand in der unteren Spannstellung festhält (Fig. 4).

In Fig. 5 ist das Halteelement mit gespannter Feder 4 im unteren Querrahmen 8 des Fensterrahmens eingesetzt. Die Scheibe 10 wird in Richtung des Pfeiles "A" an den Fensterrahmen herangeführt und soll in diesem mittels einer Kleberaupe 11 verklebt werden. Beim Andrücken der Scheibe 10 wird die Sperrklinke 9 vom unteren Scheibenrand 3 weggedrückt, wodurch der obere Stützbogen 4' der Feder 4 durch die freiwerdende Federkraft in Richtung des Pfeiles "B" gegen den darüberliegenden Scheibenrand 3 gedrückt wird (Fig. 6). Durch die Anordnung mehrerer solcher Halteelemente im unteren Querrahmen 8 ist es nun möglich, die Scheibe 10 solange in der vorbestimmten Lage zu fixieren, bis die Kleberaupe 11 ihre volle Haftwirkung entfaltet hat.

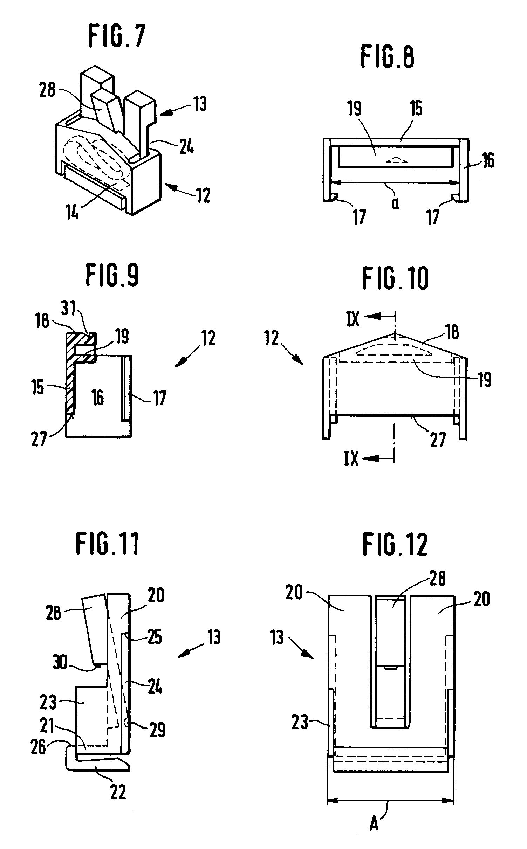

In den Figuren 7 - 12 ist ein aus drei Teilen zusammengesetztes Halteelement dargestellt, welches nach dem gleichen vorbeschriebenen Prinzip arbeitet. Das in den Figuren 8 - 10 gezeigte Stützteil 12 ist hierbei ebenso aus Kunststoff hergestellt, wie das in den Figuren 11 und 12 gezeigte Halteteil 13. Lediglich die zum. Hochdrücken des Stützteils 12 benötigte Feder 14, die beim zusammengebauten Halteelement sich im Innern befindet und daher in Fig. 7 gestrichelt dargestellt ist, ist wegen der erforderlichen Stützkraft aus Federstahl hergestellt.

Das Stützteil 12 besteht hierbei aus einer Deckwand 15 mit zwei daran rechtwinklig angeformten Seitenwänden 16, welche im Abstand von der Deckwand 15 mit parallel zu dieser verlaufenden, nach innen gerichteten Rastkanten 17 versehen ist. Am oberen Rand der Deckwand 15 ist eine vorzugsweise dachförmig ausgebildete Stützwand 18 angeformt, welche einerseits als Auflage für den unteren Scheibenrand 3 dient und andererseits nach innen eine Anlagewand 19 für das Federelement 14 bildet.

Das Halteteil 13 besteht - ähnlich wie das Halteteil 1 in Fig. 1 - aus einer am Fensterrahmen 8 anliegenden Rückwand 20 mit einem am unteren Ende rechtwinklig angeformten Stützschenkel 21 und einem nach hinten geformten Klemmschenkel 22 sowie zwei zusätzlichen Seitenwänden 23, deren äußerer Abstand "A" etwas kleiner ist als der lichte Abstand "a" zwischen den Seitenwänden 16 des Stützteils 12. Diese Seitenwände 23 sind zwar für die Stützfunktion nicht unbedingt erforderlich, aber für den Zusammenbau des Halteelements hilfreich zum seitlichen Halt der Metallfeder 14. An der rückwärtigen Seite der Rückwand 20 ist längs der beiden Kanten eine Aussparung 24 eingeformt, welche in Breite und Tiefe den Maßen der Rastkanten 17 entspricht.

In diese beiden Aussparungen 24 können die Rastkanten 17 beim Zusammenbau von Halteteil 13 und Stützteil 12 einrasten, wobei die Rastkanten 17 zunächst unter elastischer Aufweitung der Seitenwände 16 über die Seitenwände 23 gedrückt werden müssen.

Am oberen Ende der Aussparung 24 befindet sich ein Anschlag 25, durch welchen der Verschiebeweg des Stützteils 12 nach oben begrenzt ist. Nach unten wird die Begrenzung des Verschiebewegs durch die Vorderkante 26 des Stützschenkels 21 und die Unterkante 27 der Deckwand 15 erreicht.

In der Mitte der Rückwand 20 ist eine Sperrklinke 28 angeordnet, welche im unteren Bereich über eine filmscharnierartige Verbindungsstelle 29 an der Rückwand 20 schwenkbar angeformt ist und mit einer auf das Stützdach 18 gerichteten Rastnase 30 versehen ist, welche in der unteren Stellung des Stützteils 12 in eine entsprechende Rille oder Kerbe 31 am Rand des Stützdaches 18 einrastbar ist. Die Sperrklinke 28 ragt mit ihrem oberen Ende schräg in den Stützbereich der Scheibe 10 und läßt sich zwischen den seitlich der Sperrklinke 28 verbliebenen Rückwandteilen 20 elastisch nach hinten wegdrücken.

Beim Zusammenbau des Halteelements wird zunächst die Metallfeder 14 in die vom Stützschenkel 21 und den Seitenwänden 23 gebildete Nische des Halteteils 13 eingelegt. Sodann wird das Stützteil 12 mit den Seitenwänden 16 über die Seitenwände 23 des Halteteils 13 geschoben, wobei das Stützdach 18 über der entspannten Feder 14 positioniert wird. Nach dem Einrasten der Rastkanten 17 in den Aussparungen 24 ist die Feder 14 vollkommen eingeschlossen und die Sperrklinke 28 zwischen den Rückwandteilen 20 versenkt.

Nun wird das Stützteil 12 gegen den Druck der Feder 14 nach unten gedrückt, so daß die versenkte Sperrklinke 28 wieder vortreten und mit ihrer Rastnase 30 in die Rille oder Kerbe 31 des Stützdaches 18 einrasten kann.

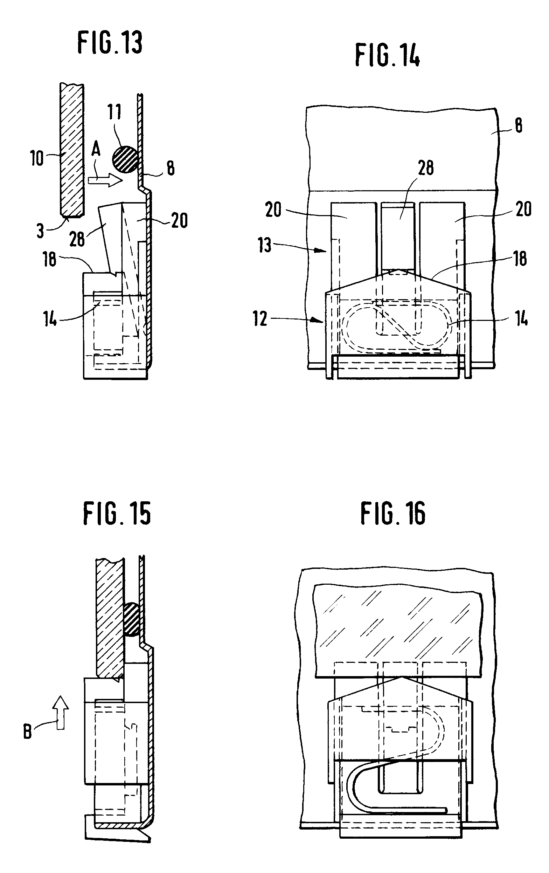

Das Halteelement ist nunmehr für den bestimmungsgemäßen Einsatz bereit und kann, wie in den Figuren 13 bis 16 dargestellt, im Fensterrahmen 8 eines Kraftfahrzeuges eingebaut und zum vorübergehenden Fixieren einer eingelegten Fensterscheibe 10 verwendet werden. Beim Andrücken der Scheibe 10 an die im Fensterrahmen 8 angebrachte Kleberaupe 11 wird die Sperrklinke 28 nach hinten weggedrückt. Dabei tritt die Rastnase 30 aus der Rille 31 heraus und das Stützteil 12 wird durch die freiwerdende Kraft der Feder 14 nach oben "geschossen", und zwar soweit, bis das Stützdach 18 am unteren Scheibenrand 3 anliegt (Fig. 15 und 16). Die Scheibe 10 wird nun durch die bloße Kraft der Federn 14 in den einzelnen Halteelementen gegen den oberen, nicht dargestellten Querrahmen angedrückt und solange gehalten, bis die Kleberaupen 11 abgehärtet sind und ihre Haltefunktion voll erfüllen.

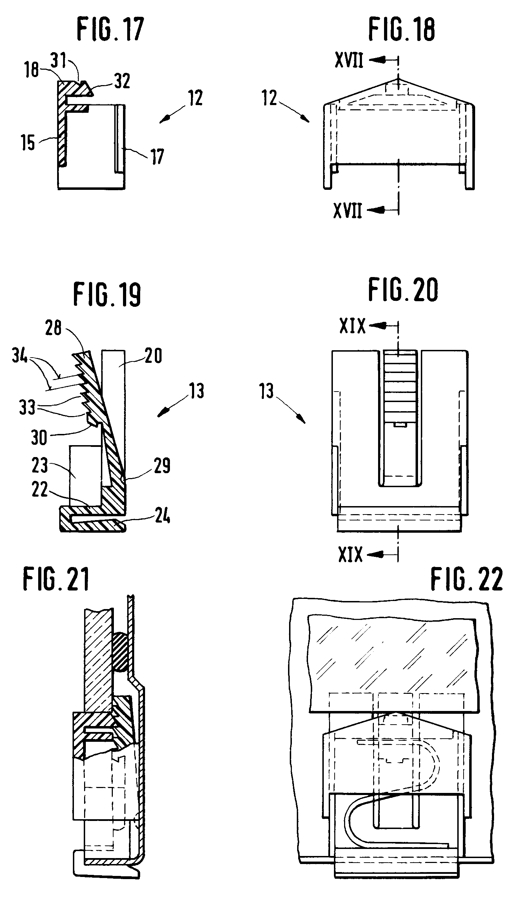

Bei dem in den Figuren 17 bis 22 dargestellten, weiteren Ausführungsbeispiel der Erfindung besitzt das Stützteil 12 neben der Rille 31 noch eine zur Sperrklinke 28 weisende, nach unten abgeflachte Rastnase 32, während die Sperrklinke 28 in ihrem oberen Bereich mit im Querschnitt sägezahnförmigen Querrillen 33 mit nach oben abgeflachten Rastflächen 34 versehen ist. Beim Hochspringen des Stützteils 12 wird die Rastnase 32 über die Querrillen 33 leicht hinweggleiten und dann in einer der Höhenlage des Scheibenrandes 3 entsprechenden Querrille 33 sich abstützen, da die zurückfedernde Sperrklinke 28 für einen sicheren Eingriff der Rastnase 32 in diese Querrille 33 sorgt (Fig. 21).

Diese Ausführungsform hat gegenüber der vorbeschriebenen Ausführungsform mit glatter Sperrklinke den Vorteil, daß die Feder 14 wesentlich schwächer und damit leichter ausgebildet sein kann. Die Federkraft muß nicht mehr das Gewicht der Scheibe 10 halten, sondern nur noch das Stützteil 12 in die Anlageposition bringen. Von da ab übernimmt die Rastnase 32 des Stützdachs 18 nach dem Einrasten in die Querrille 33 die Stützfunktion.

Es versteht sich, daß die Rastverbindung zur stufenweisen Positionierung des Stützteils 12 auch durch andere geeignete Rastmittel am Halteelement bewirkt werden kann, welche einerseits eine ungehinderte Bewegung des Stützteils 12 nach oben zulassen und in der entgegengesetzten Richtung durch Federkraft derart ineinandergreifen, daß das Stützteil in der gewünschten Höhenlage festgehalten wird.

**Patentansprüche**

1. Halteelement zum vertikalen Positionieren von im Rahmen eines Kraftfahrzeuges einklebbaren Scheiben mit einem im unteren Querrahmen einsetzbaren Halteteil und einem gegen den unteren Scheibenrand andrückbaren Stützteil, **dadurch gekennzeichnet,** daß das Stützteil (2, 12) mit dem Halteteil (1, 13) durch eine in Richtung der Scheibenebene niederdrückbare Feder (4, 14) verbunden ist und durch eine im Halteteil (1, 12) angeformte, elastisch schwenkbare Sperrklinke (9, 38) in gespannter Lage feststellbar ist, wobei die Sperrklinke (9, 38) oberhalb des gespannten Stützteils (2, 12) in den Stützbereich hineinragt und von der unteren Scheibenkante (3) beim Anlegen der Scheibe (10) weggedrückt wird.

2. Halteelement nach Anspruch 1, dadurch gekennzeichnet, daß das Stützteil (2) durch eine S-förmig gebogene Metallfeder (4) gebildet ist, welche mit dem ebenfalls aus Metallblech geformten Halteteil (1) einstückig verbunden ist.

3. Halteelement nach Anspruch 1, dadurch gekennzeichnet, daß das Stützteil (12) als separates Teil ausgebildet und zum Halteteil (13) in Richtung senkrecht zum Scheibenrand (3) verschiebbar geführt ist, wobei der Verschiebeweg in beiden Richtungen durch Anschläge (25 und 26) am Halteteil (13) begrenzt ist.

4. Halteelement nach Anspruch 3, dadurch gekennzeichnet, daß das Stützteil (12) aus einer Deckwand (15) mit zwei rechtwinklig angeformten Seitenwänden (16) besteht, welche mit nach innen gerichteten Rastkanten (17) den am Fensterrahmen (8) anliegenden Schenkel (20) des Halteteils (13) hintergreifen, und das Stützteil (12) in Stützrichtung mit einer dachförmigen Stützwand (18) versehen ist und nach innen eine Anlagewand (19) für das Federelement (4) aufweist, welches seinerseits am unteren Stützschenkel (21) des Halteteils (13) aufliegt.

5. Halteelement nach Anspruch 4, dadurch gekennzeichnet, daß die Sperrklinke (28) mit einer auf das Stützdach (18) gerichteten Rastnase (30) versehen ist, welche in eine entsprechende Rille oder Kerbe (31) am Rand des Stützdaches (18) einrastbar ist.

6. Halteelement nach Anspruch 4 oder 5, dadurch gekennzeichnet, daß das Stützteil (12) neben der Rille (31) noch eine zur Sperrklinke (28) weisende, nach unten abgeflachte Rastnase (32) aufweist, während die Sperrklinke (28) in ihrem oberen Bereich (28') mit im Querschnitt sägezahnförmigen Querrillen (33) mit nach oben abgeflachten Rastflächen (34) versehen ist.

## FIG.1

## FIG. 2

## FIG. 3

## FIG.4

## FIG. 5

## FIG.6

FIG.7

FIG.8

FIG.9

FIG.10

FIG.11

FIG.12

# FIG.13

# FIG.14

# FIG.15

# FIG.16

## FIG.17

18 31 32 12
15 17

## FIG.18

XVII
12
XVII

## FIG.19

28 20
34 13
33
30
23 29
22
24

## FIG.20

XIX
13
XIX

## FIG.21

## FIG.22